# EUROPEAN PATENT SPECIFICATION

(11) **EP 0 947 747 B1**
(45) Date of publication and mention of the grant of the patent: **24.05.2006**
(21) Application number: 99302638.4
(22) Date of filing: 01.04.1999
(51) Int. Cl.: F16J 15/34

(54) **Shaft seal apparatus**
Wellendichtung
Joint d'étanchéité pour passage d'arbre

(30) Priority: 01.04.1998 JP 8904598; 03.04.1998 JP 9210198
(43) Date of publication of application: 06.10.1999
(73) Proprietor: NIPPON PILLAR PACKING CO. LTD., Osaka-shi Osaka-fu (JP)
(72) Inventor: Okumachi, Eiji, Nippon Pillar Packing Co.,Ltd., Shimouchigami, Sanda-shi, Hyogo-ken (JP); Fujiwara, Satoshi, Nippon Pillar Packing Co.,Ltd, Shimouchigami, Sanda-shi, Hyogo-ken (JP); Fuse, Toshihiko, Nippon Pillar Packing Co., Ltd., Shimouchigami, Sanda-shi, Hyogo-ken (JP)
(74) Representative: Crump, Julian Richard John

(56) References cited:
- FR-A- 1 366 961
- US-A- 3 572 727
- US-A- 3 917 289
- US-A- 5 171 023
- PATENT ABSTRACTS OF JAPAN vol. 014, no. 388 (M-1014), 22 August 1990 (1990-08-22) & JP 02 146374 A (HITACHI LTD), 5 June 1990 (1990-06-05)

## Description

The present invention relates to a shaft seal, and has particular reference to a shaft seal for use in sealing around a rotary shaft in rotary equipment such as rotary stirrers and mixers used in the manufacture and/or processing of pharmaceuticals, foodstuffs, cosmetics and the like.

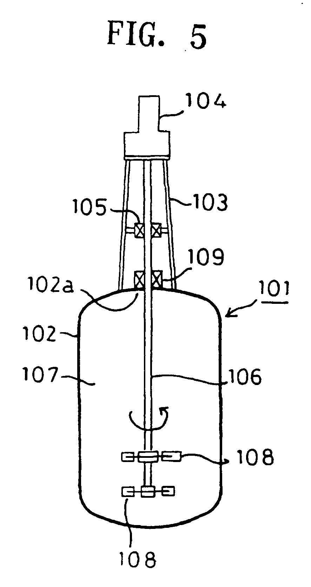

Figure 5 of the accompanying drawings shows a rotary stirrer or agitator 101 of the type known in the art for use in the manufacture of various pharmaceuticals and foodstuffs, such as fermented drinks. Stirrer 101 comprises a tank shell 102 which forms a fermentation tank, a motor-supporting frame 103 mounted on said shell, a motor 104 with a suitable reducer mounted on the motor-supporting frame 103, and a rotary shaft or stirrer shaft 106 which is fitted with agitation propellers 108. Shaft 106 is connected to the motor 104, and extends through an aperture 102a in tank shell 102 into the interior 107 of said tank. Shaft 106 is supported in a freely-rotating state by the motor-supporting frame 103 by a bearing 105, and is held vertically within the tank interior 107 such that when the shaft 106 rotates, agitation propellers 108 mounted at the lower end of the rotary shaft 106 operate to agitate material contained within the tank.

A shaft seal 109 is provided in said aperture 102a between the rotary shaft 106 and the tank shell 102, in order to prevent materials within the tank, including fermentation gases generated in the tank, from leaking out through the aperture 102a. In some known embodiments, said shaft seal 109 comprises a single or double end-face contact mechanical seal. In other known embodiments, said shaft seal 109 comprises gland-packings.

A prior art shaft seal equipped with a single end-face mechanical seal comprises a seal case, a non-rotatable sealing member mounted on the seal case, and a rotatable sealing member. When fitted to a stirrer 101, the seal case is positioned within aperture 102a around the shaft 106, and the rotatable sealing member is fixedly mounted on shaft 106 for rotation therewith. The non-rotatable sealing member mounted on the seal case is pressed against the rotatable sealing member, so that the tank 102 is sealed at this point by a sliding contact between the two relatively rotatable sealing members.

A prior art end-face contact type shaft seal provided with a double mechanical seal essentially comprises two single end-face type seals, which are arranged side by side so as to define a space therebetween. A sealing fluid is introduced into said space at a pressure higher than the pressure within the tank interior 107. The sealing fluid acts as a further sealing barrier, keeping the tank airtight and preventing the contents of the tank from leaking out through aperture 102a. The sealing fluids used in this type of seal include oils and liquids, which are selected to ensure that, should the fluid leak into the tank, no problems would arise. The type of shaft seal using oil as sealing fluid is additionally provided with an oil unit where the oil is circulated so as to keep the oil from leaking into the tank from the sealing fluid space.

A prior art shaft seal comprising gland-packings comprises a stuffing box, a number of gland-packings, which are generally braided packings, and a lantern ring provided in the middle of the gland-packings. When fitted to a stirrer 101, the stuffing box is installed within the aperture 102a, the gland-packings being arranged side by side between the stuffing box and the shaft 106, in order to seal the tank. Nitrogen gas is fed to the seal via the lantern ring.

US 3572727 discloses a dry running gas seal for a rotating shaft entering a high pressure housing. A component has a seal face, and is mounted on a mating ring provided on the shaft. A sealing ring carrier is secured in the housing and carries a sealing ring. The sealing ring is provided with a component which has two concentric flanges which present seal faces to the sealing ring seal face thereby defining a pressure cavity. A gas may be supplied to the pressure cavity by way of a passage and a chamber. The pressure of the gas in the pressure chamber reduces the loading forces on the two sealing rings.

FR 1366961 discloses a mechanical seal for a high pressure container comprising a rotary seal ring having a first seal face attached to shaft. A stationary seal ring having a second seal face is attached to a housing. A spring acts on the stationary seal ring to ensure that the seal faces are in contact. The stationary seal ring is also provided with a cavity at the seal face, and a passage allows the cavity to communicate with the inside of the container.

US 3917289 discloses a mechanical seal having a movable ring attached to a shaft and an opposing stationary ring. The stationary ring is biased towards the movable ring by a spring which ensures that opposing faces of the two rings are urged together. The opposing face of each ring is provided with a recess. There exists a gap δ between the two opposing faces which is dependent on surface irregularities of the two faces, and the tolerable leakage of a medium to be sealed. The recesses communicate with a passage which may be connected to a supply of sealing fluid which is at a pressure greater than the sealed medium. The fluid is supplied when it is desired to completely prevent leakage of the sealed medium.

JP 0216374 discloses a non-contact mechanical seal. A seal gas is supplied by way of a gas supply hole to a seal surface of a seal ring such that a gap h is maintained between the seal ring and a rotary seal ring. When supply of gas ceases the gap between the two rings comes under vacuum by dint of communication with a vacuum space. A channel and an internal space also come under vacuum, and bellows contract thus maintaining the gap h between the seal surface and the rotary seal ring.

US 5171023 discloses a shaft seal having a seal face member mounted on an apparatus body, and an opposing rotating member mounted on a shaft by way of a collar by way of springs and a series of pins. The collar is mounted on a shaft by way of fixing screws. The rotating member is provided with a seal surface which is held in contact with seal surface provided on the seal face member. The seal face member is provided with an inlet port allowing supply of a cleaning fluid, which leads to a manifold and outlet jets. The rotating member is provided with input ports and an interior channel arranged to receive fluid which is jetted from the outlet jets thus facilitating cleaning of the shaft seal.

Rotary stirrers for use in the manufacture of pharmaceuticals, foodstuffs, their basic materials and the like require strict hygienic control, and must be subjected to regular sterilisation treatment. Generally, the sterilisation of such apparatus is achieved through exposing the apparatus to jets of a sterilisation gas such as high-temperature steam. This method of sterilisation is effective, quick and low-cost. During sterilisation treatment, parts of the shaft seal that are exposed inside the tank cannot be cleaned well with the sterilisation gas jetted into the tank. Therefore, the same gas is directly jetted onto those parts of the shaft seal.

This standard method of sterilisation is however inadequate for the sterilisation of rotary stirrers which comprise shaft seals as described above. When apparatus comprising a single or double end-face mechanical seal is exposed to sterilisation gas as described above, the seal end faces of the rotatable and non-rotatable sealing members within each seal will be insufficiently exposed to sterilisation gas and will be inadequately sterilised. Especially in the double end-face seal which is complicated in construction, the sterilisation gas cannot reach many parts of the seal, leaving sterilisation grossly insufficient. Similarly, when apparatus comprising a gland packing seal is exposed to a sterilisation gas, the gas will be unable to reach and sterilise all parts of the sealing means, owing to the complexity of the construction of the sealing means.

Yet another problem relating to the hygienic control of rotary stirrers comprising the shaft seals known in the prior art arises through the generation of dust through contact wearing. In single and double end-face contact seals, contact wearing may occur between the opposing faces of the two sealing members in each seal. In a gland packing shaft seal, contact wearing is liable to occur between the gland packings and the rotary shaft 106. There is a risk that dust thus generated through contact wearing may fall into the tank and contaminate its contents. Hence, the difficulty associated with maintaining the apparatus in a hygienic condition for use in the manufacture or processing of foodstuffs or pharmaceuticals is magnified.

Yet another problem associated with a single end-face mechanical seal that gases within the tank are inadequately sealed within the tank, and are liable to leak out through the seal. Thus, toxic or odorous gases in the tank may escape from the tank, and contaminate or damage the environment.

According to a first aspect of the present invention there is provided a shaft seal apparatus comprising fluid input means and a shaft seal for sealing around a rotary shaft where said shaft extends through an aperture, said shaft seal comprising:
a first rotatable sealing member having a first face, which first rotatable sealing member is adapted to be mounted on a rotary shaft for rotation therewith;
a second non-rotatable sealing member having a second face, which second non-rotatable sealing member can be secured in or adjacent an aperture through which the shaft extends, such that said second non-rotatable sealing member encircles said shaft for closing said aperture and said second face opposes said first seal face, at least one of said first and second faces being movable into and out of contact with the other of said faces;
biasing means active on said at least one of said first and second sealing members for urging said at least one face into contact with the other of said faces for sealing the aperture; wherein
   the fluid input means is adapted to be connected to a pressurised supply of fluid, the fluid input means comprising a gas setting mechanism for selectively jetting a seal gas or a sterilisation gas through a gas channel between the first and second seal faces, characterised in that during rotation the apparatus is arranged to input seal gas between said first and second faces, urging said first and second faces apart to provide a small clearance therebetween, which clearance is flushed by said seal gas thereby preventing substantial egress of material through the seal and preventing contact wear between the seal faces and the apparatus arranged such that when the shaft is stationary the shaft seal may be sterilised by feeding sterilisation gas through the gas channel.

Preferably, said second face is adapted to be movable into and out of contact with said first face. Said biasing means may be active on said second sealing member for urging said second face towards said first face. Preferably, said second member is adapted to be movable longitudinally of said rotary shaft.

Said first and second members may be adapted to be arranged such that said first and second faces are disposed substantially normally to said rotary shaft.

Advantageously, said fluid input means may be adapted to input selectively any one or more of a plurality of different fluids between said first and second faces. Said fluid input means may be adapted to input an inert sealing gas, such as nitrogen gas, between said first and second faces. In one embodiment, said fluid input means is adapted to input selectively a sterilisation fluid, such as high-temperature steam, between said first and second faces for sterilising said shaft seal.

Said fluid input means may be provided with flow-rate regulatory means for regulating the flow-rate of fluid between said first and second faces such that said flow-rate remains substantially constant regardless of the size of said clearance between said first and second faces. Optionally, said flow-rate regulatory means may comprise a constriction, a capillary member, a capillary portion, or a porous member, provided within said fluid input means.

Said fluid input means may comprise at least one fluid channel formed in said second sealing member, which fluid channel opens in said second face of the second sealing member. Advantageously, at least one of said first and said second faces may define at least one groove, which groove is arranged to communicate with said fluid input means such that said groove can be flushed by said fluid.

In some embodiments of the present invention, said second member is carried by a seal case that is adapted to be mounted juxtaposed said aperture.

Said seal case may further comprise fluid output means for venting fluid from said seal case.

The shaft seal may further comprise at least one coupling bearing mounted between said rotary shaft and said seal case for coupling said rotary shaft to said seal case such that said shaft is substantially immovable radially with respect to said rotary shaft.

Preferably, said first rotatable sealing member comprises a seal disc which is adapted to be mounted on said rotary shaft. Said biasing means may comprise spring means. Preferably, at least one of said first and second faces comprises a corrosion-resistant material, such as a ceramic material.

There may be provided a rotary stirring or agitator apparatus comprising a tank provided with an aperture for a rotary shaft, a rotary shaft adapted to extend through said aperture, and a shaft seal in accordance with the invention, which shaft seal is adapted to seal around said rotary shaft where said shaft extends through said aperture.

There may be provided a rotary stirrer or agitator for use in the manufacture and/or processing of material such as pharmaceuticals, foodstuffs, cosmetics and the like, which stirrer or agitator comprises: a tank adapted to hold said material, which tank is provided with an aperture; a stirring member for stirring said material, which stirring member comprises a rotary shaft which extends through said aperture; and a shaft seal in accordance with the present invention, which shaft seal is adapted to seal around said rotary shaft where said shaft extends through said aperture.

Preferably, the pressure of said pressurised supply of fluid is greater than the pressure within said tank.

According to a second aspect of the present invention there is provided a method of sealing around a rotary shaft where said shaft extends through an aperture, using a shaft seal apparatus comprising fluid input means and a shaft seal comprising:
a first rotatable sealing member having a first face, which first rotatable sealing member is adapted to be mounted on a rotary shaft for rotation therewith;
a second non-rotatable sealing member having a second face, which second non-rotatable sealing member can be secured in or adjacent an aperture through which the shaft extends, such that said second non-rotatable sealing member encircles said shaft for closing said aperture and said second face opposes said first seal face, at least one of said first and second faces being movable into and out of contact with the other of said faces;
biasing means active on said at least one of said first and second sealing members for urging said at least one face into contact with the other of said faces for sealing the aperture; wherein
   the fluid input means is adapted to be connected to a pressurised supply of fluid, the fluid input means comprising a gas jetting mechanism for selectively jetting a seal gas or a sterilisation gas through a gas channel between the first and second seal faces, characterised by the steps of, during rotation of the shaft, inputting seal gas between said first and second faces urging said first and second faces apart to provide a small clearance therebetween, which clearance is flushed by said seal gas thereby preventing substantial egress of material through the seal and preventing contact wear between the seal faces, and, when the shaft is stationary, sterilising the shaft seal by feeding sterilisation gas through the gas channel.

Following is a description by way of example only with reference to the drawings of embodiments of the present invention and methods for putting the present invention into effect.

In the drawings:
Figure 1 shows a cross-sectional side view of a shaft seal in accordance with the present invention mounted on a tank shell 102.
Figure 2 shows an enlarged cross-sectional side view of a part of the shaft seal shown in Figure 1.
Figure 3 shows a plan view of the seal end face of the stationary sealing ring of the shaft seal shown in Figure 1.
Figure 4 shows an enlarged cross-sectional side view, corresponding to Figure 2, of another embodiment of the present invention.
Figure 5 shows a schematic view of rotary equipment comprising a shaft seal.

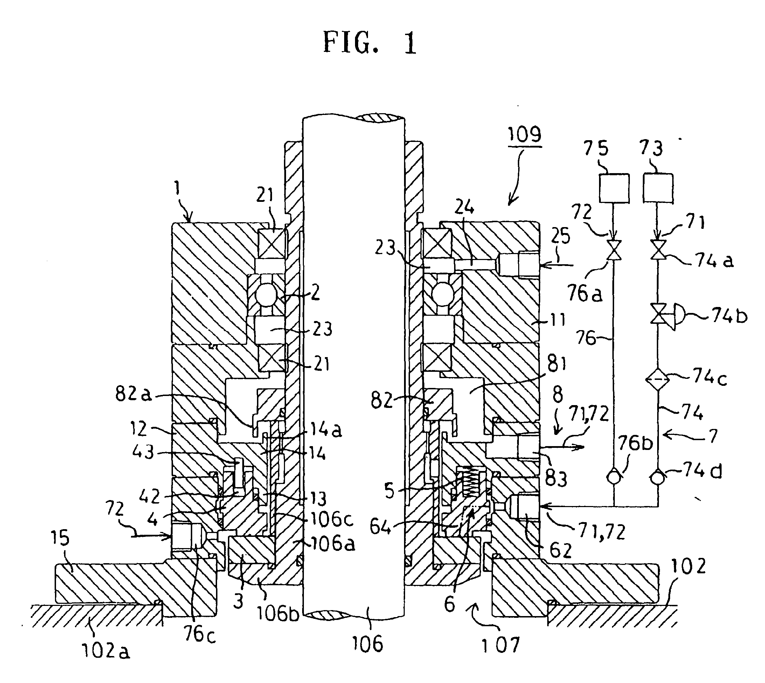

A shaft seal 109 shown in Figure 1 is arranged to seal around an agitator shaft or rotary shaft 106 where said shaft extends through an aperture 102a in tank shell 102. Said shaft seal 109 comprises a seal case 1 which is mounted on said tank shell 102 around said aperture 102a; a coupling means 2 which couples said seal case 1 and said shaft 106 such that the shaft 106 and the seal case 1 are relatively rotatable but relatively unmovable radially; a rotary sealing ring 3 with a first seal end face 31, which rotary sealing ring 3 is provided inside the seal case 1 and is fixedly mounted on the rotary shaft 106; a stationary sealing ring 4 with a second seal end face 41, which stationary sealing ring 4 is arranged in the seal case 1 such that said first seal end face 31 opposes said second seal end face 41; and a thrusting member 5 mounted between the seal case 1 and the stationary sealing ring 4, which thrusting member 5 presses said stationary ring 4 against said rotary sealing ring 3. Shaft seal 109 further comprises a gas channel 6 comprising a series of gas passages which run through said seal case 1 and said stationary sealing ring 4 and which open between the opposing seal end faces 31 and 41 of the two sealing rings 3 and 4; a gas jetting mechanism 7 for selectively jetting seal gas 71 or sterilization gas 72 through said gas channel 6 between said seal end faces 31 and 41; and a gas draining mechanism 8 for discharging gases 71 and 72 from the seal case. Said shaft seal 109 is adapted to seal the tank 107 defined by tank shell 102; that is, the peripheral space around the relatively rotatable sealing rings 3 and 4; while holding the two seal end faces 31 and 41 in a non-contact state by jetting seal gas 71 between the two seal end faces.

The seal case 1 shown in Figure 1 comprises a cylindrical main body 11, a retainer portion comprising three parts 12, 13 and 14 in the lower section of the main body 11, and a circular flange portion 15. Seal case 1 is mounted on aperture 102a of the tank shell 102 by means of said flange portion 15, such that said seal case 1 surrounds the rotary shaft 106 concentrically. Said retainer portion is of a double cylindrical construction opening downward with a cylindrical outer retainer 12 and an inner retainer 13 connected via a circular back wall 14.

The coupling member 2, as shown in Figure 1, comprises a bearing mounted between the upper section of the main body 11 of the seal case 1 and a cylindrical sleeve 106a which encircles shaft 106. Coupling member 2 couples the seal case 1 and the shaft 106 such that the seal case 1 and the shaft 106 are relatively rotatable and relatively non-movable in the radial direction and the axial direction. As shown in Figure 1, lubrication spaces 23 are defined between said main body 11 and said sleeve 106a, and are kept air-tight by oil seals 21, provided on either side of the coupling member 2. A lubricant path 24 is provided for enabling a lubricant (such as grease) 25 to be injected into the lubrication spaces 23 for lubricating the coupling member 2.

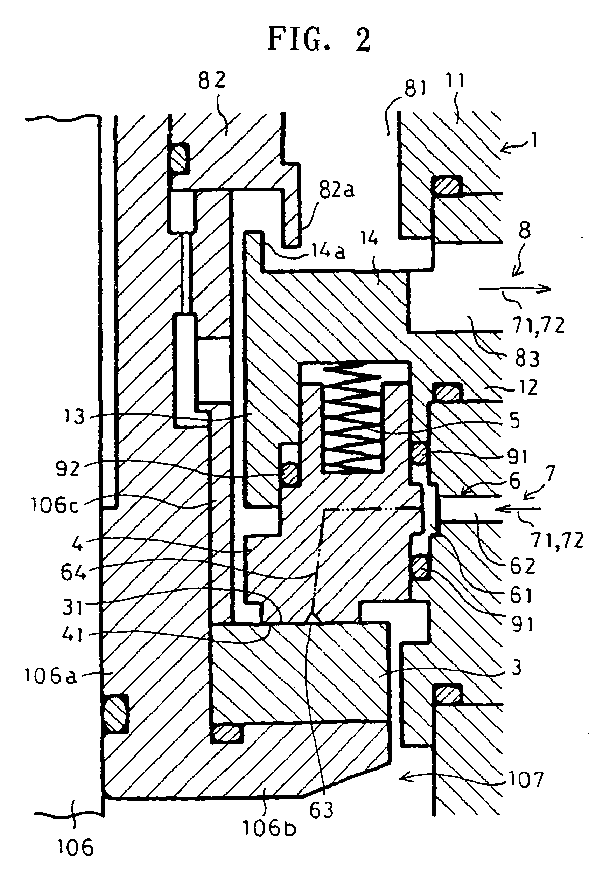

The rotary sealing ring 3, as illustrated in Figures 1 and 2, is fitted into the lower part of the sleeve 106a, clamped between a circular jaw portion 106b formed integrally on the lower part of the sleeve 106a and a cylindrical clamping sleeve 106c fitted around the lower section thereof, such that said rotary sealing ring 3 is non-movable in the axial direction, and is non-rotatable relative to said sleeve 106a.

The stationary sealing ring 4, as shown in Figures 1 and 2, is held in the seal case 1 such that said second seal end face 41 is concentric with and opposed to said first seal end face 31 on the rotary sealing ring 3. Said stationary sealing ring 4 is freely-slidable in the axial direction, and is non-rotatable relative to said seal case 1. A pair of parallel O-rings 91 and an O-ring 92 (shown in Figure 2) are provided as secondary seals around the periphery of the stationary sealing ring 4. 0-rings 91 are freely-slidable in the axial direction over the inner cylindrical surface of said outer retainer 12. O-ring 92 is freely-slidable in the axial direction over the outer circumferential surface of said inner retainer 13. Stationary sealing ring 4 comprises a plurality of engaging recesses 42 on its upper end face (or back side) as shown in Figure 1. Pins 43 embedded in said back wall 14 are arranged to engage in said recesses 42. Thus, said stationary sealing ring 4 is prevented from rotating relative to said seal case 1, whilst remaining free to move in the axial direction, within a specific distance.

The thrusting member 5 comprises one or a plurality of coil springs (one coil spring shown in the Figures), which are mounted between said stationary sealing ring 4 and said back wall 14, and act to press said stationary sealing ring 4 towards said rotary sealing ring 3, as shown in Figures 1 and 2.

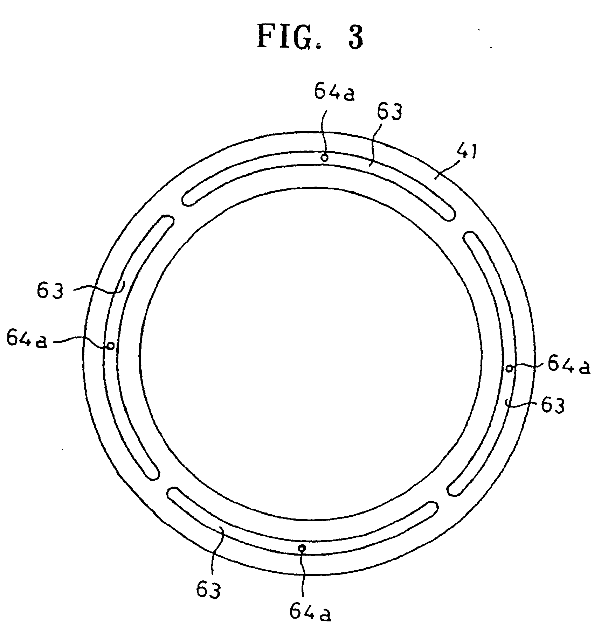

Gas channel 6, as shown in Figures 1 to 3, comprises a passage 62 formed in said seal case 1; a space 61 defined between the inner cylindrical surface of the outer retainer 12 on said seal case 1 and the outer circumferential surface of said stationary sealing ring 4, and sealed by said pair of parallel O-rings 91, a passage 64 formed in said stationary sealing ring 4; and a plurality of static pressure generating grooves 63 formed in said second seal end face 41 of the stationary sealing ring 4. Said passage 62 extends from the outer circumferential surface of the seal case 1, and communicates with said space 61. Said passage 64 communicates with said space 61 and extends to said second seal end face 41 of the stationary sealing ring 4. Said passage 64 communicates with each of said grooves 63 via a plurality of branch terminals 64a. As shown in Figure 3, each of said static pressure generating grooves 63 comprises a circular arc-formed recess, and forms an annulus concentric with said second seal end face 41.

Said gas jetting mechanism 7, as shown in Figure 1, comprises a seal gas supply pipe 74 led from a seal gas supply source 73 and having its downstream end connected to the passage 62 on the seal case side; a seal gas supply valve 74a, a pressure control valve 74b, a filter 74c and a check valve 74d all provided on the seal gas supply pipe 74; a sterilization gas supply pipe 76 led from a sterilization gas supply source 75 and having its downstream end connected to the seal gas supply pipe 74 on the downstream side of the check valve 74d; and a sterilization gas supply valve 76a and a check valve 76b provided on the sterilization gas supply pipe 76. Gas jetting mechanism 7 is arranged to jet seal gas 71 and sterilization gas 72 selectively into the gas channel 6, under a higher pressure than the pressure level in the tank 107. The seal gas 71 is selected to ensure that no serious problems will arise should the gas 71 leak into the tank 107. In the present embodiment, nitrogen gas is used as the seal gas 71.

The draining mechanism 8 includes, as shown in Figures 1 and 2, a drain space 81 within the seal case 1, a slinger 82 provided in the drain space 81 and clamped onto said sleeve 106a; and a discharge channel 83 leading through the main body 11 of the seal case 1 and opening at the lower side of the drain space 81. Said drain space 81 is shielded from the tank 107 by the seal end faces 31 and 41, and from the lubrication space 23 by the lower oil seal 21. Said slinger 82 is provided with a cylindrical protrusion 82a on the peripheral edge thereof. The inner circumferential surface of cylindrical protrusion 82a is arranged to oppose the outer circumferential surface of a cylindrical protrusion 14a formed on the inner circumferential edge of said back wall 14. The discharge channel 83 is opened at a level matching, in the axial direction, the cylindrical protrusions 14a and 82a. In the draining mechanism 8, the gases 71 and 72 are enabled to flow from between the seal end faces 31 and 41 into the drain space 81 and between the two protrusions 14a and 82a. The gases 71 and 72 are guided by the cylindrical protrusion 82a to flow into the discharge channel 83, from which the gases can be discharged quickly and smoothly. There is little possibility that the gases will flow upwardly towards the oil seal 21, instead of being discharged through the discharge channel 83. Therefore, the likelihood is small that the oil seal 21 will be exposed to and deteriorated by the high-temperature steam 72.

Thus, in normal operation where an aperture 102a on a tank shell 102 is to be sealed by the shaft seal 109, the seal gas supply valve 74a is opened while the sterilization gas supply valve 76a is kept closed. Thus, pressurised seal gas 71, at a pressure higher than that in the tank 107, is supplied to the static pressure generating grooves 63 from the seal gas supply pipe 74, via the passage 62, the space 61, and the passage 64, so as to generate an opening force between the two seal end faces 31 and 41. This opening force is generated by a static pressure produced by the seal gas 71 led to the static pressure generating grooves 53. An equilibrium is established between said opening force and the closing force arising through the action of said thrusting member 5 on the stationary sealing ring 4, with the result that a small clearance is produced between the seal end faces 31 and 41. Since the pressure of the seal gas 71 is higher than that in the tank 107, fluid within the tank, such as fermentation gas, cannot creep in between the seal end faces 31 and 41. Thus, the tank 107 is completely sealed, precluding the possibility of contaminating the environment.

In operation of a stirrer 101 incorporating shaft seal 109 of the invention, the arrangement is such that rotation of the rotary shaft 106 will commence only after the supply of seal gas 71 has been switched on, and a clearance has consequently been established between the seal end faces 31 and 41. The supply of seal gas 71 will be cut off only after the rotary shaft 106 has come to a complete standstill.

In order to ensure that an effective seal is maintained between the two seal end faces 31 and 41, it is necessary to keep the seal end faces 31 and 41 parallel to and concentric with one another. If the mounting of the seal case 1 on the tank shell 102 is imprecise, or if the rotary shaft 106 vibrates, the parallelism and concentricity of the two seal end faces may be lost, resulting in deterioration in the sealing function. This is a particular problem in many rotary stirrers of the kind shown in Figure 5; especially those in which the rotary shaft 106 is supported by means of the bearing 105 at the upper part alone, as it is difficult to prevent vibration of the rotary shaft in operation.

In a rotary stirrer incorporating a shaft seal 109 of the invention, this problem is mitigated by the provision of said coupling member or bearing 2 between said seal case 1 and said rotary shaft 106. The coupling arrangement is such that said seal case 1 and said rotary shaft 106 are freely rotatable with respect to one another, but are relatively non-movable in the axial and radial directions. Thus, vibration of the rotary shaft 106 in operation will give rise to minimal change in the relative positions of the rotary sealing ring 3 (mounted on the rotary shaft 106) and the stationary sealing ring 4 (mounted in the seal case 1). The seal end faces 31 and 41 may therefore be kept parallel to and concentric with one another, thus ensuring a good sealing function. Moreover, as the coupling member or bearing serves to ensure a constant relation of position between the seal case 1 and the rotary shaft 106, it is possible to attain a much more precise installation of the seal case 1 on the tank shell 102. Furthermore, said coupling member or bearing 2 acts in conjunction with the bearing 105 to hold or support the rotary shaft, thus minimising the vibration of the shaft in operation. That is, the rotary shaft 106 is supported by two bearings: the bearing 105 at a point apart from the tank shell 102 and the bearing 2 at a point close to the tank shell 102. Thus, the shaft vibration caused by the stirring resistance on the agitation propellers 108, can be controlled to the maximum possible extent, with the stirring effect improved.

The arrangement exhibits a hygienic seal function, because the tank 107 is sealed with the seal end faces 31 and 41 kept in a non-contact state, and thus no dust will be produced through contact wear between the faces 31 and 41. Whilst the seal gas 71 may leak into the tank 107 from the clearance between the seal end faces 31 and 41, this leakage will not give rise to any problems, as the seal gas is selected (as described above) to be a type of gas, such as nitrogen gas, which may leak into the tank without causing any problems.

When the tank 107 is to be sterilized, the rotary action of the shaft is put out of operation, and no sealing of the tank is required. As mentioned earlier, the tank 107 of the stirrer 101 is sterilized by the jetting of a sterilization fluid, such as high-temperature steam, within the tank. Similarly, the inner portions of the shaft seal 109 can be sterilized well by feeding a sterilization gas 72 through the gas feeding channel 6. Conveniently, the sterilization gas 72 will be the same as that used for sterilization of the tank 107 - such as, for example, high-temperature steam.

During sterilisation of the inner portions of the shaft seal 109, the sterilisation gas supply valve 76a is opened with the seal gas supply valve 74a kept closed, so that the sterilization gas 72 under a suitable pressure (under the same pressure as that of the seal gas 71, for example) is fed to the static pressure generating grooves 63 from the sterilisation gas supply pipe 76, via the passage 62, the space 61 and the passage 64. Sterilisation gas 72 is fed into the sterilisation gas supply pipe 76 from sterilisation gas supply source 75. Sterilisation gas supply source 75 may also be used to supply sterilisation gas for sterilisation of the tank 107. A sterilisation gas passage 76c is formed through the outer retainer 12 of the seal case 1 and is also connectable to the sterilisation gas supply pipe 76, such that sterilisation gas 72 may be supplied to the sterilisation gas passage 76c from the sterilisation gas supply pipe 76, and may be jetted onto the outer circumferential surfaces of sealing rings 3 and 4 at the periphery of the seal end faces 31 and 41.

That is, if, with the rotary shaft at a standstill, the sterilisation gas supply valve 76a is opened with the seal gas supply valve kept closed, steam 72 will be supplied through the gas channel 6, and will flow to the static pressure generating grooves 63, pass between the seal end faces 31 and 41, and flow into the tank 107 and the drain space 81. In the initial stage, the seal end faces 31 and 41 are in contact with each other, but steam 72 (which is under the same pressure as the seal gas 71) creates an opening force between the seal end faces 31 and 41, producing a small clearance therebetween.

Thus the steam 72 is enabled to effect thorough sterilisation not only of the inside of the gas channel 6, but also of the seal end faces 31 and 41. The steam 72 which jets into the tank 107 from the clearance between the seal end faces 31 and 41 comes in contact with the parts of the shaft seal (including the outer circumferential surfaces of the sealing rings 3 and 4) which are inside the tank 107, and flows into the tank 107. Those parts of the seal are additionally treated by steam 72 which is jetted from the sterilisation gas channel 76c towards the outer circumferential surface of the sealing rings 3 and 4 at the periphery of the seal end faces 31 and 41.

As set forth above, the shaft seal 109 seals the tank 107 by feeding the seal gas 71 under a higher pressure than the pressure in the tank to between the seal end faces 31 and 41, keeping the seal end faces 31 and 41 in a non-contact state. Thus, the tank 107 can be effectively sealed precluding leakage of material from the tank, and no contact wear dust will be generated between the seal end faces 31 and 41. Thus, the problems associated with the penetration of dust into the tank 107 are alleviated. In addition, a sterilisation gas 72 such as steam may be jetted to the outer and inner circumferential surfaces of the seal end faces 31 and 41 as hereinbefore described, and therefore, the inner portions of the shaft seal, especially the seal end faces 31 and 41 may be effectively sterilised. Thus, it is possible to maintain an effective seal and exercise proper hygienic control in a rotary stirrer 101 which incorporates the shaft seal 109 of the present invention.

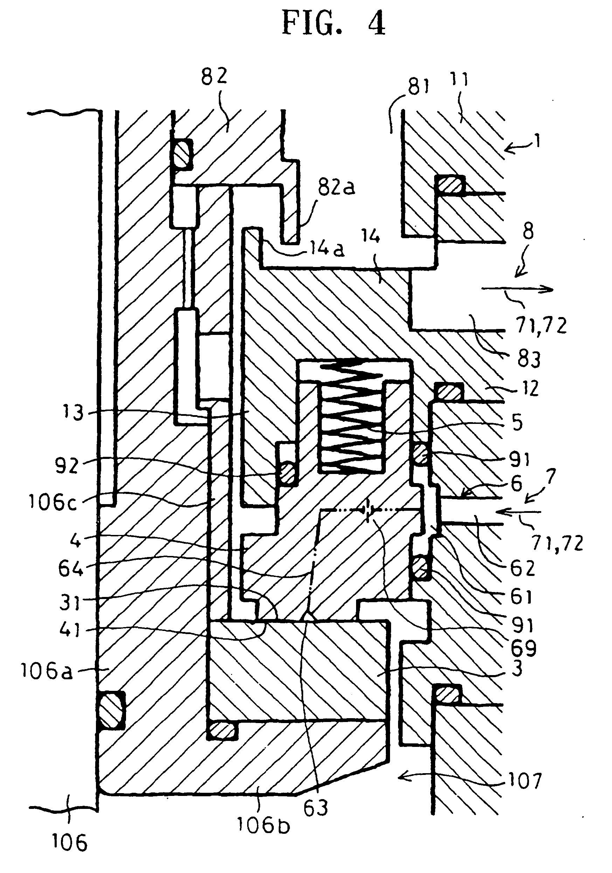

In the embodiment shown in Figure 4, a shaft seal 109 is provided with a flow-rate regulatory means 69, such as a constriction, an orifice, a capillary tube or portion, or a porous component part, which is provided at a suitable place, conveniently within the gas input means 6, for enabling the flow-rate of gas between the seal end faces 31 and 41 to be regulated and/or automatically adjusted. In the illustrated embodiment, flow-rate regulatory means 69 is provided within the gas passage 64, and acts to ensure a constant flow-rate of gas from the passage 64 into the grooves 63. The arrangement is such that when the clearance between the seal end faces 31 and 41 increases, for example because of vibration of the rotary shaft or other components of the stirrer 101, the flow-rate of the seal gas 71 from the static pressure generating grooves 63 to between the seal end faces 31 and 41 will increase, moving out of equilibrium with the flow-rate of seal gas from the flow rate regulatory means 69 into the static pressure generating grooves 63. Hence, the pressure within the static pressure generating grooves 63 will decrease, and the opening force between the sealing rings will go down. As a result, the clearance between the seal end faces 31 and 41 will decrease to a proper size. On the other hand, if the clearance between the seal end faces 31 and 41 should decrease in size, the flow-rate of seal gas 71 from the grooves 63 to between the seal end faces 31 and 41 will decrease; the pressure in the grooves will go up; and the clearance between the seal end faces 31 and 41 will once again increase to the equilibrium size.

In other variations, the static pressure generating grooves 63 may be in any form. For example, an annular groove may be formed that is concentric with said seal end face 41.

The shaft seal 109 of the present invention may be used not only in fermentation stirrers of the type generically depicted in Figure 5, but also in various other kinds of rotary equipment, in particular those which require vigorous sterilisation by sterilisation fluids such as high-temperature steam; for example, agitators and mixers for use in the production of pharmaceuticals, foodstuffs, cosmetics and the like. Unlike known dynamic pressure type non-contact seals in which the seal end faces of two opposing sealing rings are held apart from one another by dynamic pressure generated from the relative rotation of said two opposing sealing rings, the shaft seal 109 of the present invention is suitable for use in rotary equipment in which the rate of rotation of the rotary shaft 106 is not high enough to generate the required dynamic pressure for separating two opposing sealing rings. The shaft seal 109 is also suitable for use in rotary equipment for treating toxic or odorous substances which must be completely sealed within the tank 107. Needless to say, whichever type of rotary equipment is to be sealed, the properties and pressure of the seal gas 71 and the sterilization gas 72 must be selected with a view to the probable uses and conditions of operation of the rotary equipment.

The component parts of the shaft seal 109 (including the sleeves 106a and 106c) can be made of metal, taking into consideration the fermentation temperature and hygiene. For example, metal having the JIS designation SUS 316 may be used. For the component parts of the sealing rings 3 and 4, the selection of metal is made taking into consideration factors such as sealing conditions. In the present embodiment, the rotary sealing ring 3 is made of the metallic material having the JIS designation SUS 316, and the seal face end face 31 thereof is coated with a ceramic such as CrO₂. The stationary sealing ring 4 is made of carbon.

## Claims

1. A shaft seal apparatus comprising fluid input means and a shaft seal (109) for sealing around a rotary shaft (106) where said shaft (106) extends through an aperture (102a), said shaft seal (109) comprising:
a first rotatable sealing member (3) having a first face (31), which first rotatable sealing member (3) is adapted to be mounted on a rotary shaft (106) for rotation therewith;
a second non-rotatable sealing member (4) having a second face (41), which second non-rotatable sealing member (4) can be secured in or adjacent an aperture (102a) through which the shaft (106) extends, such that said second non-rotatable sealing member (4) encircles said shaft (106) for closing said aperture (102a) and said second face (41) opposes said first seal face (31), at least one of said first and second faces (31, 41) being movable into and out of contact with the other of said faces (31, 41);
biasing means (5) active on said at least one of said first and second sealing members (3,4) for urging said at least one face (31,41) into contact with the other of said faces (31,41) for sealing the aperture (102a); wherein
the fluid input means is adapted to be connected to a pressurised supply of fluid (71, 72), the fluid input means comprising a gas jetting mechanism (7),
**characterised in that**:
the gas jetting mechanism is arranged selectively to jet a seal gas (71) or a sterilisation gas (72) through a gas channel (6) between the first and second seal faces (31, 41);
the gas channel (6) comprises a passage (64) through the non-rotable sealing member (4) and a plurality of static pressure generating grooves (63) formed in said second face (41) such that, in normal operation, seal gas (71) is input between said first and second faces (31, 41), urging said first and second faces apart by a static pressure produced by the seal gas (71) to provide a small clearance therebetween, which clearance is flushed by said seal gas (71) thereby preventing substantial egress of material through the seal (109) and preventing contact wear between the seal faces (31, 41); and
the apparatus is arranged such that when the shaft (106) is stationary the shaft seal (109) may be sterilised by feeding sterilisation gas (72) through the gas channel (6, 64, 63).

2. A shaft seal (109) as claimed in claim 1, **characterised in that** said second face (41) is adapted to be movable into and out of contact with said first face (31).

3. A shaft seal (109) as claimed in claim 1 or claim 2, wherein said biasing means (5) is active on said second sealing member (4) for urging said second face (41) towards said first face (31).

4. A shaft seal (109) as claimed in any preceding claim , **characterised in that** said second sealing member (4) is adapted to be moveable longitudinally of said rotary shaft (106).

5. A shaft seal (109) as claimed in any preceding claim, **characterised in that** said first and second sealing members (3,4) are arranged such that said first and second faces (31,41) are disposed substantially normally to said rotary shaft (106).

6. A shaft seal (109) as claimed in any preceding claim, wherein said fluid input means (6,7,61,62,63) is adapted to input selectively any one or more of a plurality of different fluids (71,72) between said first and second faces (31,41).

7. A shaft seal (109) as claimed in any preceding claim, wherein said sealing gas (71) comprises an inert gas such as nitrogen.

8. A shaft seal (109) as claimed in any preceding claim, wherein said sterilization gas (72) comprises high temperature steam.

9. A shaft seal (109) as claimed in any preceding claim, wherein said fluid input means (6,7,61,62,63) is provided with flow-rate regulatory means (69) for regulating the flow-rate of fluid (71,72) between said first and second faces (31,41) such that said flow-rate remains substantially constant regardless of the size of said clearance between said first and second faces (31,41).

10. A shaft seal (109) as claimed in any preceding claim, wherein said flow rate regulatory means (69) comprises a capillary member or a capillary portion or a porous member, provided within said fluid input means (6,7,61,62,63).

11. A shaft seal (109) as claimed in any preceding claim, **characterised in that** said fluid input means (6,7,61,62,63) comprises at least one fluid channel (6) formed in said second sealing member, which fluid channel (6) opens in said second face (41) of the second sealing member (4).

12. A shaft seal (109) as claimed in any preceding claim, **characterised in that** at least one of said first and second faces (31,41) defines at least one groove (63), which groove (63) is arranged to communicate with said fluid input means (6,7,61,62,63) such that said groove can be pressurized by said fluid (71, 72).

13. A shaft seal (109) as claimed in any preceding claim, **characterised in that** said second sealing member (4) is carried by a seal case (1) that is adapted to be mounted over said aperture (102a).

14. A shaft seal (109) as claimed in any preceding claim, further comprising fluid output means (83) for venting said fluid (71,72) from said seal case (1).

15. A shaft seal (109) as claimed in claim 13, further comprising at least one bearing (2) mounted between said rotary shaft (106) and said seal case (1) for coupling said rotary shaft (106) to said seal case (1).

16. A shaft seal (109) as claimed in any preceding claim, **characterised in that** said first rotatable sealing member (3) comprises an annular seal disc (106b) which is adapted to be mounted on said rotary shaft (106), substantially concentrically with said shaft (106).

17. A shaft seal (109) as claimed in any preceding claim, wherein said biasing means (5) comprises a spring means.

18. A shaft seal (109) as claimed in any preceding claim, **characterised in that** at least one of said first and second faces (31,41) comprises a corrosion-resistant material such as a ceramic material.

19. A shaft seal (109) as claimed in any preceding claim for sealing round a rotary shaft (106) where said shaft (106) extends through an aperture (102a) in a tank (102), **characterised in that** said second sealing member (4) is adapted to be mounted on said tank (102).

20. A shaft seal (109) as claimed in claim 19, **characterised in that** the pressure of said pressurized supply of fluid (71,72) is greater that the pressure within said tank (102).

21. A rotary stirring apparatus comprising a tank (102) which comprises an aperture (102a) for a rotary shaft (106), a rotary shaft (106) which extends through said aperture (102a), and a shaft seal (109) as claimed in any preceding claim, which shaft seal is adapted to seal around said rotary shaft (106) where said shaft extends through said aperture (102a).

22. A rotary stirrer for use in the manufacture and /or processing of material such as pharmaceuticals, foodstuffs, and cosmetics, which stirrer comprises: a tank (102) adapted to hold said material, which tank (102) comprises an aperture (102a); a stirring member for stirring said material, which stirring member comprises a rotary shaft (106) which extends through said aperture (102a); and a shaft seal (109) as claimed in any of claims 1-18, which shaft seal (109) is adapted to seal around said rotary shaft (106) where said shaft (106) extends through said aperture (102a)

23. A method of sealing around a rotary shaft (106)where said shaft (106) extends through an aperture (102a), using a shaft seal apparatus comprising fluid input means and a shaft seal (109) comprising:
a first rotatable sealing member (3) having a first face (31), which first rotatable sealing member (3) is adapted to be mounted on a rotary shaft (106) for rotation therewith;
a second non-rotatable sealing member (4) having a second face (41), which second non-rotatable sealing member (4) can be secured in or adjacent an aperture (102a) through which the shaft (106) extends, such that said second non-rotatable sealing member (4) encircles said shaft (106) for closing said aperture (102a) and said second face (41) opposes said first seal face (31), at least one of said first and second faces (31, 41) being movable into and out of contact with the other of said faces (31, 41);
biasing means (5) active on said at least one of said first and second sealing members (3,4) for urging said at least one face (31,41) into contact with the other of said faces (31,41) for sealing the aperture (102a); wherein
the fluid input means is adapted to be connected to a pressurised supply of fluid (71, 72), the fluid input means comprising a gas jetting mechanism (7) for selectively jetting a seal gas (71) or a sterilisation gas (72) through a gas channel (6, 61, 62, 63) between the first and second seal faces (31, 41), **characterised by** the steps of, during rotation of the shaft (106), inputting seal gas (71) between said first and second faces (31, 41) urging said first and second faces apart to provide a small clearance therebetween, which clearance is flushed by said seal gas (71) thereby preventing substantial egress of material through the seal and preventing contact wear between the seal faces, and, when the shaft (106) is stationary, sterilising the shaft seal (109) by feeding sterilisation gas (72) through the gas channel (6, 61, 62, 63).

## Patentansprüche

1. Wellendichtungsvorrichtung, enthaltend Fluideingangseinrichtungen und eine Wellendichtung (109) zum Abdichten um eine Drehwelle (106), wobei die Welle (106) durch eine Öffnung (102a) verläuft, welche Wellendichtung (109) enthält:
ein erstes drehbares Dichtungselement (3), das eine erste Seite (31) hat, welches erste drehbare Dichtungselement (3) ausgelegt ist, an einer Drehwelle (106) zur Drehung damit montiert zu werden;
ein zweites nicht drehbares Dichtungselement (4), das eine zweite Seite (41) hat, welches zweite nicht drehbare Dichtungselement (4) befestigt werden kann in oder benachbart einer Öffnung (102a), durch welche die Welle (106) verläuft, so dass das zweite nicht drehbare Dichtungselement (4) die Welle (106) zum Schließen der Öffnung (102a) umgibt und die zweite Seite (41) der ersten Dichtungsseite (31) gegenüber liegt, wobei wenigstens eine der ersten und zweiten Seiten (31, 41) bewegbar ist in und außer Kontakt mit der anderen der Seiten (31, 41); Vorspanneinrichtungen (5), die auf wenigstens eines der ersten und zweiten Dichtungselemente (3, 4) wirkt, um die wenigstens eine Seite (31, 41) in Kontakt mit der anderen der Seiten (31, 41) zu drängen, um die Öffnung (102a) abzudichten; wobei
die Fluideingangseinrichtungen ausgelegt sind, um mit einer unter Druck gesetzten Zufuhr von Fluid (71, 72) verbunden zu werden, welche Fluideingangseinrichtungen einen Gasausströmmechanismus (7) enthalten,
**dadurch gekennzeichnet, dass**:
der Gasausströmmechanismus selektiv angeordnet ist, um ein Dichtungsgas (71) oder ein Sterilisationsgas (72) durch einen Gaskanal (6) zwischen den ersten und zweiten Dichtungsseiten (31, 41) auszustoßen;
der Gaskanal (6) eine Passage (64) durch das nicht drehbare Dichtungselement (4) und eine Mehrzahl von statischen Druckerzeugungsnuten (63) enthält, die in der zweiten Seite (41) ausgebildet sind, so dass im Normalbetrieb Dichtungsgas (71) zwischen die ersten und zweiten Seiten (31, 41) eingegeben wird, was die ersten und zweiten Seiten durch einen statischen Druck auseinander drängt, der durch das Dichtungsgas (71) erzeugt wird, um einen kleinen Freiraum dazwischen bereit zu stellen, welcher Freiraum von dem Dichtungsgas (71) durchströmt wird, wodurch ein wesentliches Entweichen von Material durch die Dichtung (109) verhindert wird und ein Kontaktverschleiß zwischen den Dichtungsseiten (31, 41) verhindert wird; und
die Vorrichtung eingerichtet ist, so dass, wenn die Welle (106) stationär ist, die Wellendichtung (109) durch Zuführen von Sterilisationsgas (72) durch den Gaskanal (6, 64, 63) sterilisiert werden kann.

2. Wellendichtung (109) nach Anspruch 1, **dadurch gekennzeichnet, dass** die zweite Seite (41) ausgelegt ist, um in und außer Kontakt mit der ersten Seite (31) bewegbar zu sein.

3. Wellendichtung (109) nach Anspruch 1 oder Anspruch 2, wobei die Vorspanneinrichtungen (5) auf das zweite Dichtungselement (4) wirken, um die zweite Seite (41) zu der ersten Seite (31) hin zu drängen.

4. Wellendichtung (109) nach einem der vorhergehenden Ansprüche, **dadurch gekennzeichnet, dass** das zweite Dichtungselement (4) ausgelegt ist, um in Längsrichtung der Drehwelle (106) bewegbar zu sein.

5. Wellendichtung (109) nach einem der vorhergehenden Ansprüche, **dadurch gekennzeichnet, dass** die ersten und zweiten Dichtungselemente (3, 4) so angeordnet sind, dass die ersten und zweiten Seiten (31, 41) im wesentlichen normal zu der Drehwelle (106) angeordnet sind.

6. Wellendichtung (109) nach einem der vorhergehenden Ansprüche, wobei die Fluideingangseinrichtungen (6, 7, 61, 62, 63) ausgelegt sind, um selektiv irgend eines oder mehrere einer Mehrzahl von verschiedenen Fluiden (71, 72) zwischen die ersten und zweiten Seiten (31, 41) einzugeben.

7. Wellendichtung (109) nach einem der vorhergehenden Ansprüche, wobei das Dichtungsgas (71) ein inertes Gas, wie Stickstoff, enthält.

8. Wellendichtung (109) nach einem der vorhergehenden Ansprüche, wobei das Sterilisationsgas (72) Hochtemperaturdampf enthält.

9. Wellendichtung (109) nach einem der vorhergehenden Ansprüche, wobei die Fluideingangseinrichtungen (6, 7, 61, 62, 63) mit Strömungsratenregeleinrichtungen (69) zum Regeln der Strömungsrate von Fluid (71, 72) zwischen die ersten und zweiten Seiten (31, 41) versehen sind, so dass die Strömungsrate im wesentlichen konstant bleibt, ungeachtet der Größe des Freiraums zwischen den ersten und zweiten Seiten (31, 41).

10. Wellendichtung (109) nach einem der vorhergehenden Ansprüche, wobei die Strömungsratenregeleinrichtungen (69) ein Kapillarelement oder einen Kapillarteil oder ein poröses Element enthalten, das innerhalb der Fluideingangseinrichtungen (6, 7, 61, 62, 63) vorgesehen ist.

11. Wellendichtung (109) nach einem der vorhergehenden Ansprüche, **dadurch gekennzeichnet, dass** die Fluideingangseinrichtungen (6, 7, 61, 62, 63) wenigstens einen Fluidkanal (6) enthalten, der in dem zweiten Dichtungselement ausgebildet ist, welcher Fluidkanal (6) sich in die zweite Seite (41) des zweiten Dichtungselementes (4) öffnet.

12. Wellendichtung (109) nach einem der vorhergehenden Ansprüche, **dadurch gekennzeichnet, dass** wenigstens eine der ersten und zweiten Seiten (31, 41) wenigstens eine Nut (63) definiert, welche Nut (63) angeordnet ist, um mit den Fluideingangseinrichtungen (6, 7, 61, 62, 63) zu kommunizieren, so dass die Nut von dem Fluid (71, 72) unter Druck gesetzt werden kann.

13. Wellendichtung (109) nach einem der vorhergehenden Ansprüche, **dadurch gekennzeichnet, dass** das zweite Dichtungselement (4) von einem Dichtungsgehäuse (1) getragen wird, das ausgelegt ist, um über der Öffnung (102a) montiert zu werden.

14. Wellendichtung (109) nach einem der vorhergehenden Ansprüche, ferner enthaltend Fluidausgangseinrichtungen (83) zum Auslassen des Fluides (71, 72) aus dem Dichtungsgehäuse (1).

15. Wellendichtung (109) nach Anspruch 13, ferner enthaltend wenigstens ein Lager (2), das zwischen der Drehwelle (106) und dem Dichtungsgehäuse (1) montiert ist, um die Drehwelle (106) an das Dichtungsgehäuse (1) zu koppeln.

16. Wellendichtung(109) nach einem der vorhergehenden Ansprüche, **dadurch gekennzeichnet, dass** das erste drehbare Dichtungselement (3) eine ringartige Dichtungsscheibe (106b) enthält, die ausgelegt ist, um an der Drehwelle (106) im wesentlichen konzentrisch mit der Welle (106) montiert zu werden.

17. Wellendichtung (109) nach einem der vorhergehenden Ansprüche, wobei die Vorspanneinrichtungen (5) eine Federeinrichtung enthalten.

18. Wellendichtung (109) nach einem der vorhergehenden Ansprüche, **dadurch gekennzeichnet, dass** wenigstens eine der ersten und zweiten Seiten (31, 41) ein korrosionsbeständiges Material, wie ein Keramikmaterial, enthält.

19. Wellendichtung (109) nach einem der vorhergehenden Ansprüche, zum Abdichten um eine Drehwelle (106) herum, wobei die Welle (106) durch eine Öffnung (102a) in einem Tank (102) verläuft, **dadurch gekennzeichnet, dass** das zweite Dichtungselement (4) ausgelegt ist, um an dem Tank (102) montiert zu werden.

20. Wellendichtung (109) nach Anspruch 19, **dadurch gekennzeichnet, dass** der Druck der unter Druck gesetzten Zufuhr von Fluid (71, 72) größer als der Druck innerhalb des Tanks (102) ist.

21. Drehrührvorrichtung, enthaltend einen Tank (102), der eine Öffnung (102a) für eine Drehwelle (106), eine Drehwelle (106), die durch die Öffnung (102a) verläuft, und eine Wellendichtung (109) enthält, wie sie in jeglichem vorhergehenden Anspruch beansprucht wurde, welche Wellendichtung ausgelegt ist, um um die Drehwelle (106) herum abzudichten, wo die Welle durch die Öffnung (102a) verläuft.

22. Drehrührer zur Verwendung bei der Herstellung und/oder Verarbeitung von Material, wie Pharmazeutika, Nahrungsmitteln und Kosmetika, welcher Rührer enthält: einen Tank (102), der ausgelegt ist, um das Material zu beinhalten, welcher Tank (102) eine Öffnung (102a) enthält; ein Rührelement zum Rühren des Materials, welches Rührelement eine Drehwelle (106) enthält, die durch die Öffnung (102a) verläuft; und eine Wellendichtung (109), wie sie in jeglichem der Ansprüche 1 - 18 beansprucht ist, welche Wellendichtung (109) ausgelegt ist, um um die Drehwelle (106) herum abzudichten, wo die Welle (106) durch die Öffnung (102a) verläuft.

23. Verfahren zum Abdichten um eine Drehwelle (106) herum, wo die Welle (106) durch eine Öffnung (102a) verläuft, unter Verwendung einer Wellendichtungsvorrichtung, die Fluideingangseinrichtungen und eine Wellendichtung (109) enthält, enthaltend:
ein erstes drehbares Dichtungselement (3), das eine erste Seite (31) hat, welches erste drehbare Dichtungselement (3) ausgelegt ist, an einer Drehwelle (106) zur Drehung damit montiert zu werden;
ein zweites nicht drehbares Dichtungselement (4), das eine zweite Seite (41) hat, welches zweite nicht drehbare Dichtungselement (4) befestigt werden kann in oder benachbart einer Öffnung (102a), durch welche die Welle (106) verläuft, so dass das zweite nicht drehbare Dichtungselement (4) die Welle (106) zum Schließen der Öffnung (102a) umgibt und die zweite Seite (41) der ersten Dichtungsseite (31) gegenüber liegt, wobei wenigstens eine der ersten und zweiten Seiten (31, 41) bewegbar ist in und außer Kontakt mit der anderen der Seiten (31, 41); Vorspanneinrichtungen (5), die auf wenigstens eines der ersten und zweiten Dichtungselemente (3, 4) wirkt, um die wenigstens eine Seite (31, 41) in Kontakt mit der anderen der Seiten (31, 41) zu drängen, um die Öffnung (102a) abzudichten; wobei
die Fluideingangseinrichtungen ausgelegt sind, um mit einer unter Druck gesetzten Zufuhr von Fluid (71, 72) verbunden zu werden, welche Fluideingangseinrichtungen einen Gasausströmmechanismus (7) zum selektiven Ausgeben eines Dichtungsgases (71) oder eines Sterilisationsgases (72) durch einen Gaskanal (6, 61, 62, 63) zwischen die ersten und zweiten Dichtungsseiten (31, 41) enthalten, **gekennzeichnet durch** die Schritte, dass während einer Drehung der Welle (106) eingegebenes Dichtungsgas (71) zwischen den ersten und zweiten Seiten (31, 41) die ersten und zweiten Seiten voneinander weg drängt, um einen kleinen Freiraum dazwischen bereit zu stellen, welcher Freiraum von dem Dichtungsgas (71) durchströmt wird, wodurch ein wesentliches Entweichen von Material **durch** die Dichtung verhindert wird und ein Kontaktverschleiß zwischen den Dichtungsseiten verhindert wird, und, wenn die Welle (106) stationär ist, die Wellendichtung (109) **durch** Zuführen von Sterilisationsgas (72) **durch** den Gaskanal (6, 61, 62, 63) sterilisiert wird.

## Revendications

1. Dispositif d'étanchéité d'arbre comprenant des moyens d'entrée de fluide et un joint d'arbre (109) pour assurer l'étanchéité autour d'un arbre rotatif (106) là où ledit arbre (106) s'étend à travers une ouverture (102a), ledit joint d'arbre (109) comprenant :
un premier élément d'étanchéité rotatif (3) comportant une première face (31), lequel premier élément d'étanchéité rotatif (3) est adapté pour être monté sur un arbre rotatif (106) pour tourner avec celui-ci ;
un deuxième élément d'étanchéité non rotatif (4) comportant une deuxième face (41), lequel deuxième élément d'étanchéité non rotatif (4) peut être fixé dans ou adjacent à une ouverture (102a) à travers laquelle l'arbre (106) s'étend, de sorte que ledit deuxième élément d'étanchéité non rotatif (4) entoure ledit arbre (106) pour fermer ladite ouverture (102a) et que ladite deuxième face (41) soit face à ladite première face de joint (31), au moins l'une desdites première et deuxième faces (31, 41) pouvant être amenée en contact avec l'autre desdites faces (31, 41) et séparée de celle-ci ;
des moyens de sollicitation (5) actifs sur ledit au moins un desdits premier et deuxième éléments d'étanchéité (3, 4) pour pousser ladite au moins une face (31, 41) en contact avec l'autre desdites faces (31, 41) pour fermer hermétiquement l'ouverture (102a) ; dans lequel
les moyens d'entrée de fluide sont adaptés pour être reliés à une alimentation en fluide sous pression (71, 72), les moyens d'entrée de fluide comprenant un mécanisme d'éjection de gaz (7),
**caractérisé en ce que** :
le mécanisme d'éjection de gaz est agencé pour éjecter de manière sélective un gaz d'étanchéité (71) ou un gaz de stérilisation (72) à travers un canal de gaz (6) entre les première et deuxième faces de joint (31, 41) ;
le canal de gaz (6) comprend un passage (64) à travers l'élément d'étanchéité non rotatif (4) et une pluralité de rainures de génération de pression statique (63) formées dans ladite deuxième face (41) de sorte que, en fonctionnement normal, un gaz d'étanchéité (71) soit entré entre lesdites première et deuxième faces (31, 41), séparant lesdites première et deuxième faces par une pression statique produite par le gaz d'étanchéité (71) afin de réaliser un petit dégagement entre celles-ci, lequel dégagement est rempli par ledit gaz d'étanchéité (71), empêchant de ce fait une sortie sensible de matériau à travers le joint (109) et empêchant une usure par contact des faces de joint (31, 41) ; et
le dispositif est agencé de sorte que, lorsque l'arbre (106) est immobile, le joint d'arbre (109) puisse être stérilisé en délivrant un gaz de stérilisation (72) à travers le canal de gaz (6, 64, 63).

2. Joint d'arbre (109) selon la revendication 1, **caractérisé en ce que** ladite deuxième face (41) est adaptée pour être amenée en contact avec ladite première face (31) et séparée de celle-ci.

3. Joint d'arbre (109) selon la revendication 1 ou la revendication 2, dans lequel lesdits moyens de sollicitation (5) sont actifs sur ledit deuxième élément d'étanchéité (4) pour pousser ladite deuxième face (41) vers ladite première face (31).

4. Joint d'arbre (109) selon l'une quelconque des revendications précédentes, **caractérisé en ce que** ledit deuxième élément d'étanchéité (4) est adapté pour être mobile longitudinalement par rapport audit arbre rotatif (106).

5. Joint d'arbre (109) selon l'une quelconque des revendications précédentes, **caractérisé en ce que** lesdits premier et deuxième éléments d'étanchéité (3, 4) sont agencés de sorte que lesdites première et deuxième faces (31, 41) soient disposées sensiblement normales audit arbre rotatif (106).

6. Joint d'arbre (109) selon l'une quelconque des revendications précédentes, dans lequel lesdits moyens d'entrée de fluide (6, 7, 61, 62, 63) sont adaptés pour entrer, de manière sélective, l'un quelconque ou plus d'une pluralité de fluides (71, 72) différents entre lesdites première et deuxième faces (31, 41).

7. Joint d'arbre (109) selon l'une quelconque des revendications précédentes, dans lequel ledit gaz d'étanchéité (71) comprend un gaz inerte tel que de l'azote.

8. Joint d'arbre (109) selon l'une quelconque des revendications précédentes, dans lequel ledit gaz de stérilisation (72) comprend de la vapeur à haute température.

9. Joint d'arbre (109) selon l'une quelconque des revendications précédentes, dans lequel lesdits moyens d'entrée de fluide (6, 7, 61, 62, 63) sont pourvus de moyens de régulation de débit (69) pour réguler le débit de fluide (71, 72) entre lesdites première et deuxième faces (31, 41) de sorte que ledit débit reste sensiblement constant indépendamment de la dimension dudit dégagement entre lesdites première et deuxième faces (31, 41).

10. Joint d'arbre (109) selon l'une quelconque des revendications précédentes, dans lequel lesdits moyens de régulation de débit (69) comprennent un élément capillaire ou une partie capillaire ou un élément poreux, prévu dans lesdits moyens d'entrée de fluide (6, 7, 61, 62, 63).

11. Joint d'arbre (109) selon l'une quelconque des revendications précédentes, **caractérisé en ce que** lesdits moyens d'entrée de fluide (6, 7, 61, 62, 63) comprennent au moins un canal de fluide (6) formé dans ledit deuxième élément d'étanchéité, lequel canal de fluide (6) s'ouvre dans ladite deuxième face (41) du deuxième élément d'étanchéité (4) .

12. Joint d'arbre (109) selon l'une quelconque des revendications précédentes, **caractérisé en ce qu'**au moins l'une desdites première et deuxième faces (31, 41) définit au moins une rainure (63), laquelle rainure (63) est agencée pour communiquer avec lesdits moyens d'entrée de fluide (6, 7, 61, 62, 63) de sorte que ladite rainure puisse être mise sous pression par ledit fluide (71, 72).

13. Joint d'arbre (109) selon l'une quelconque des revendications précédentes, **caractérisé en ce que** ledit deuxième élément d'étanchéité (4) est supporté par un logement de joint (1) qui est adapté pour être monté sur ladite ouverture (102a).

14. Joint d'arbre (109) selon l'une quelconque des revendications précédentes, comprenant en outre des moyens de sortie de fluide (83) pour évacuer ledit fluide (71, 72) dudit logement de joint (1).

15. Joint d'arbre (109) selon la revendication 13, comprenant en outre au moins un roulement à billes (2) monté entre ledit arbre rotatif (106) et ledit logement de joint (1) pour accoupler ledit arbre rotatif (106) audit logement de joint (1).

16. Joint d'arbre (109) selon l'une quelconque des revendications précédentes, **caractérisé en ce que** ledit premier élément d'étanchéité rotatif (3) comprend un disque d'étanchéité annulaire (106b) qui est adapté pour être monté sur ledit arbre rotatif (106), sensiblement concentriquement avec ledit arbre (106).

17. Joint d'arbre (109) selon l'une quelconque des revendications précédentes, dans lequel lesdits moyens de sollicitation (5) comprennent des moyens formant ressort.

18. Joint d'arbre (109) selon l'une quelconque des revendications précédentes, **caractérisé en ce qu'**au moins l'une desdites première et deuxième faces (31, 41) comprend un matériau résistant à la corrosion tel qu'une céramique.

19. Joint d'arbre (109) selon l'une quelconque des revendications précédentes pour assurer l'étanchéité autour d'un arbre rotatif (106) là où ledit arbre (106) s'étend à travers une ouverture (102a) dans un réservoir (102), **caractérisé en ce que** ledit deuxième élément d'étanchéité (4) est adapté pour être monté sur ledit réservoir (102).

20. Joint d'arbre (109) selon la revendication 19, **caractérisé en ce que** la pression de ladite alimentation en fluide sous pression (71, 72) est supérieure à la pression dans ledit réservoir (102).

21. Dispositif d'agitation rotatif comprenant un réservoir (102) qui comprend une ouverture (102a) pour un arbre rotatif (106), un arbre rotatif (106) qui s'étend à travers ladite ouverture (102a), et un joint d'arbre (109) selon l'une quelconque des revendications précédentes, lequel joint d'arbre est adapté pour assurer l'étanchéité autour dudit arbre rotatif (106) là où ledit arbre s'étend à travers ladite ouverture (102a).

22. Agitateur rotatif destiné à être utilisé pour la fabrication et/ou le traitement de matériau tel que des produits pharmaceutiques, des aliments, des cosmétiques, lequel agitateur comprend : un réservoir (102) adapté pour contenir ledit matériau, lequel réservoir (102) comprend une ouverture (102a) ; un élément d'agitation pour agiter ledit matériau, lequel élément d'agitation comprend un arbre rotatif (106) qui s'étend à travers ladite ouverture (102a) ; et un joint d'arbre (109) selon l'une quelconque des revendications 1 à 18, lequel joint d'arbre (109) est adapté pour assurer l'étanchéité autour dudit arbre rotatif (106) là où ledit arbre (106) s'étend à travers ladite ouverture (102a).

23. Procédé pour assurer l'étanchéité autour d'un arbre rotatif (106) là où ledit arbre (106) s'étend à travers une ouverture (102a) en utilisant un dispositif d'étanchéité d'arbre comprenant des moyens d'entrée de fluide et un joint d'arbre (109), comprenant :
un premier élément d'étanchéité rotatif (3) comportant une première face (31), lequel premier élément d'étanchéité rotatif (3) est adapté pour être monté sur un arbre rotatif (106) pour tourner avec celui-ci ;
un deuxième élément d'étanchéité non rotatif (4) comportant une deuxième face (41), lequel deuxième élément d'étanchéité non rotatif (4) peut être fixé dans ou adjacent à une ouverture (102a) à travers laquelle l'arbre (106) s'étend, de sorte que ledit deuxième élément d'étanchéité non rotatif (4) entoure ledit arbre (106) pour fermer ladite ouverture (102a) et que ladite deuxième face (41) soit face à ladite première face de joint (31), au moins l'une desdites première et deuxième faces (31, 41) pouvant être amenée en contact avec l'autre desdites faces (31, 41) et séparée de celle-ci ;
des moyens de sollicitation (5) actifs sur ledit au moins un desdits premier et deuxième éléments d'étanchéité (3, 4) pour pousser ladite au moins une face (31, 41) en contact avec l'autre desdites faces (31, 41) pour fermer hermétiquement l'ouverture (102a) ; dans lequel
les moyens d'entrée de fluide sont adaptés pour être reliés à une alimentation en fluide sous pression (71, 72), les moyens d'entrée de fluide comprenant un mécanisme d'éjection de gaz (7) pour éjecter de manière sélective un gaz d'étanchéité (71) ou un gaz de stérilisation (72) à travers un canal de gaz (6, 61, 62, 63) entre les première et deuxième faces de joint (31, 41), **caractérisé par** les étapes consistant à, pendant la rotation de l'arbre (106), entrer un gaz d'étanchéité (71) entre lesdites première et deuxième faces (31, 41) séparant lesdites première et deuxième faces afin de réaliser un petit dégagement entre celles-ci, lequel dégagement est rempli par ledit gaz d'étanchéité (71), empêchant de ce fait une sortie sensible de matériau à travers le joint et empêchant une usure par contact des faces de joint, et, lorsque l'arbre (106) est immobile, stériliser le joint d'arbre (109) en délivrant un gaz de stérilisation (72) à travers le canal de gaz (6, 61, 62, 63).
